**Europäisches Patentamt**

**European Patent Office**

**Office européen des brevets**

(19)

(11) Veröffentlichungsnummer: **0 270 725**
**B1**

(12)

# EUROPÄISCHE PATENTSCHRIFT

(45) Veröffentlichungstag der Patentschrift:
**23.05.90**

(51) Int. Cl.[5]: **B01J 19/00, C06B 21/00**

(21) Anmeldenummer: **87100978.3**

(22) Anmeldetag: **24.01.87**

(54) **System für das batchweise chemische und/oder physikalische Behandeln von Stoffmengen.**

(30) Priorität: **10.12.86 CH 4919/86**

(43) Veröffentlichungstag der Anmeldung:
**15.06.88 Patentblatt 88/24**

(45) Bekanntmachung des Hinweises auf die Patenterteilung:
**23.05.90 Patentblatt 90/21**

(84) Benannte Vertragsstaaten:
**AT BE DE ES FR GB IT LU NL SE**

(56) Entgegenhaltungen:
**EP-A- 0 070 037**
**FR-A- 841 333**
**FR-A- 2 513 799**

(73) Patentinhaber: **GEBRÜDER SULZER AKTIENGESELLSCHAFT, Zürcherstrasse 9, CH-8401 Winterthur(CH)**

(72) Erfinder: **Schmid, Raymond, Drosselweg 6, CH-8400 Winterthur(CH)**

(74) Vertreter: **Sparing Röhl Henseler Patentanwälte European Patent Attorneys, Rethelstrasse 123, D-4000 Düsseldorf 1(DE)**

**Beschreibung**

Die Erfindung betrifft ein System für das batchwise chemische und/oder physikalische Behandeln von Stoffmengen, insbesondere von Explosiv-, Gift- oder anderen Schadstoffen, ohne menschliches Eingreifen innerhalb möglicher Gefahrenzonen.

Um die Gefährdung des Menschen am Arbeitsplatz möglichst zu verringern, soll - beispielsweise für eine Fabrikation und/oder für Pilotversuche - ein System geschaffen werden, das soweit automatisiert ist, dass ein menschliches Eingreifen in die Prozesse und/oder Untersuchungen im Gefahrenbereich nicht mehr erforderlich ist.

Aufgabe der Erfindung ist es, ein solches System unter Beachtung der Nebenbedingung einer hohen Flexibilität für einen Wechsel der zu behandelnden Stoffmengen zu schaffen. Die Forderung einer hohen Flexibilität bezüglich der zu verarbeitenden Stoffe bedingt, dass für den "Fluss" der zu behandelnden und behandelten Stoffmengen fixe "Strömungswege", z. B. Rohrverbindungen, möglichst weitgehend zu vermeiden sind.

Mit der Erfindung wird diese Aufgabe dadurch gelöst, dass mindestens eine Behandlungsstufe mit drei auf unterschiedlichen vertikalen Niveauebenen angeordneten Böden vorgesehen ist, wobei dem mittleren Boden, der sogenannten Bedienungsebene, die Behandlungsaggregate zugeordnet sind, während auf den beiden äusseren Böden, den sogenannten Transportebenen, an die Aggregate ankoppelbare führerlose Fahrzeuge mit Transportgefässen für das Zuführen zu behandelnder bzw. für das Wegführen behandelter Stoffmengen zirkulieren.

Die Unterteilung des Systems in eine Zufuhrebene für die zu behandelnden Ausgangsstoffe oder Edukte, eine Bedienungsebene und eine Abfuhrebene für die Wegführung der behandelten Stoffe oder Produkte, ermöglicht den Stofftransport mit führerlosen Transportfahrzeugen ohne zu grossen Flächenbedarf durchzuführen und erleichtert eine "Führung" der Behandlungen von einem ausserhalb der Behandlungsstufe liegenden Steuer- und Kontrollzentrum. Weiterhin wird dadurch die Gefahr von Kollisionen zwischen einzelnen Fahrzeugen verringert. Die Problematik des Förderns von Pulvern oder ähnlichen Medien wird durch diese Anordnung wesentlich verringert.

Vorteilhafterweise kann dabei auf dem Boden der Bedienungsebene ein Roboter zirkulieren, dessen ungehindertes Zirkulieren durch die Aufteilung des Systems in mehrere Ebenen ebenfalls erleichtert wird. Zusätzliche Sicherheit bei der Zirkulation der führerlosen Fahrzeuge bzw. Roboter lässt sich erreichen, wenn die führerlosen Fahrzeuge und/oder die Roboter spurgebunden sind.

Als weitere Sicherheitsmassnahmen ist es vorteilhaft, wenn mindestens die Böden der Transportebenen geschlossen sind, und/oder wenn mindestens die Bedienungsebene einer Behandlungsstufe mit einer Inertgas-Atmosphäre gefüllt ist. Durch die erste dieser Massnahmen wird die Behandlungsstufe gegenüber benachbarten Stufen und/oder die Umgebung isoliert, so dass Unglücksfälle, wie Explosionen, oder das Ausströmen von Gift- oder Schadstoffen sehr oft auf die Behandlungsstufe beschränkt werden können. Eine Inertgas-Atmosphäre verhindert bei Unglücksfällen gegebenenfalls unerwünschte chemische Reaktionen.

Verläuft beispielsweise ein Produktionsprozess über Zwischenprodukte, so ist es zweckmässig, wenn mehrere vertikal übereinander angeordnete Behandlungsstufen vorhanden sind, wobei bei einem Teil dieser Stufen die Transportebene für das Wegführen behandelter Stoffe einer höhergelegenen Stufe gleichzeitig die Transportebene für das Zuführen zu behandelnder Stoffe einer darunter liegenden Stufe bildet.

Ohne die Flexibilität des Systems zu beeinträchtigen kann sein Aufbau vereinfacht werden, wenn auf der Bedienungsebene der Behandlungsstufe fixe Transportwege und Anschlüsse für von aussen zugeführte thermische, elektrische, pneumatische und/oder hydraulische Energie an den einzelnen Behandlungsaggregaten vorhanden sind, und/oder wenn mindestens ein Teil der Böden mit Anschlussstellen für den Anschluss von Transportgefässen versehen ist, und wenn ferner von den Anschlussstellen fixe Leitungsverbindungen zu den Behandlungsaggregaten bestehen.

Im folgenden wird die Erfindung anhand eines Ausführungsbeispiels im Zusammenhang mit der Zeichnung näher erläutert.

Fig. 1 ist in schematischer Darstellung eine Einheit von mehreren vertikal übereinander angeordneten Behandlungsstufen;

Fig. 2 gibt eine Aufsicht auf die Bedienungsebene der mittleren Behandlungsstufe von Fig. 1 wieder.

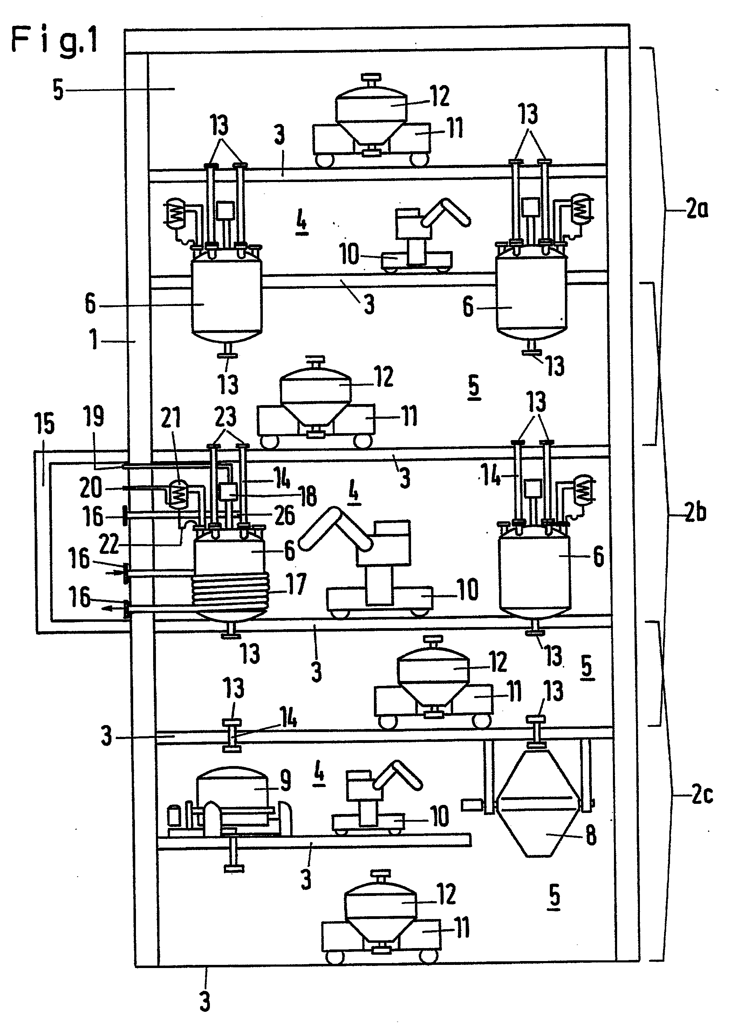

In einem schematisch angedeuteten Gebäude 1 (Fig. 1) sind drei Behandlungsstufen 2a bis 2c vertikal übereinander angeordnet, wobei zu jeder Behandlungsstufe 2a bis 2c drei auf unterschiedlichen Niveauhöhen liegende Böden 3 gehören; der obere und der untere Boden 3 jeder Stufe bilden je eine Transportebene 5, wobei die Transportebenen 5 der mittleren Behandlungsstufe 2b mit einer der Transportebene der darüber liegenden Stufen 2a bzw. der darunter liegenden Stufen 2c gemeinsam sind.

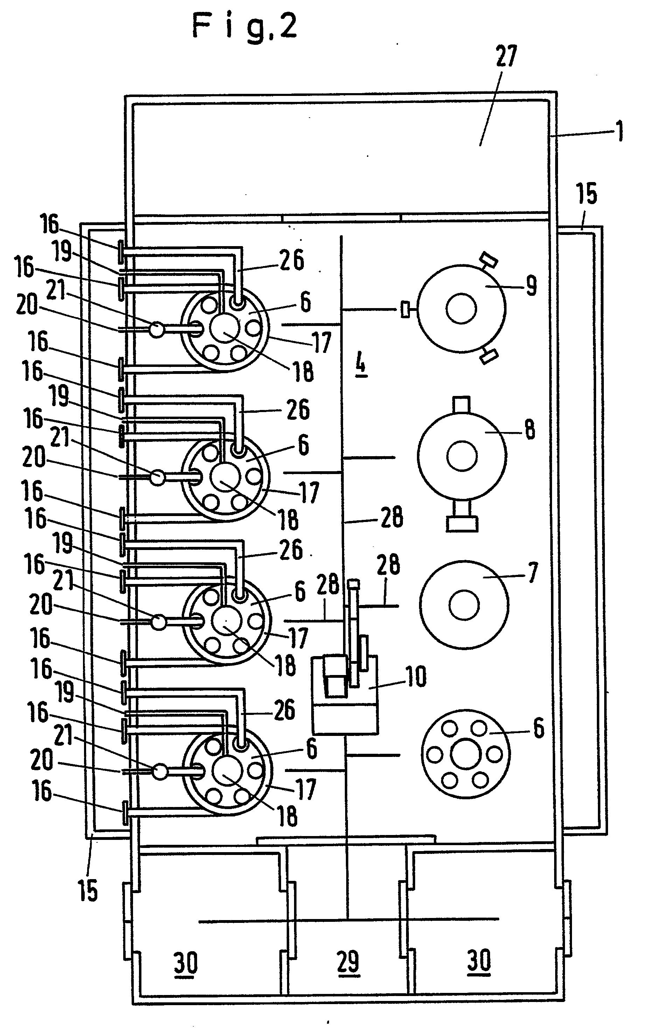

Zwischen den Transportebenen 5 jeder Behandlungsstufe 2a bis 2c liegt eine Bedienungsebene 4, in oder auf der Behandlungsaggregate, z. B. chemische Reaktoren 6, Filter 7 (Fig. 2), Trockener 8 und/oder Zentrifugen 9 vorhanden sind. Auf jeder Bedienungsebene 4 ist weiterhin ein Roboter 10 vorgesehen, durch den beispielsweise Stoffproben zu Analysen entnommen oder andere Manipulationen an den Behandlungsaggregaten 6 bis 9 durchgeführt werden.

Auf jeder Transportebene 5 sind für den Stofftransport führerlose Fahrzeuge 11 vorhanden, die ein oder mehrere Transportgefässe 12 tragen. Die in der oberen Transportebene 5 jeder Stufe 2a bis 2c zirkulierenden Fahrzeuge 11 dienen der Zufuhr der Ausgangsstoffe oder Edukte, die in den Behandlungsaggregaten 6 bis 9 verarbeitet werden sollen; auf der unteren Transportebene 5 jeder Stufe 2a bis 2c werden die "Behandlungsprodukte" dieser Stufe abgeführt.

Den Fahrzeugen 11 der jeweils oberen Transportebene 5 der Stufen 2a bis 2c können dabei die Edukte von ausserhalb des Systems liegenden Materiallagern durch nicht gezeigte Einspeisevorrichtungen zugeführt werden. Es ist jedoch auch möglich, als Edukte Produkte einer vorhergehenden Behandlungsstufe 2a bzw. 2b für eine nachfolgende Stufe 2b oder 2c zu verwenden, wobei es gegebenenfalls selbstverständlich möglich ist, eine Behandlungsstufe 2b zu "überspringen", d.h. Produkte der Stufe 2a als Edukte direkt der Stufe 2c zuzuführen. Somit können die Inhalte von Transportgefässen 12 einer unteren Transportebene 5 als Edukt in eine nachfolgende Stufe 2b oder 2c entleert oder aus dem System weggeführt werden.

Transportgefährt 11 und Roboter 10 sind im vorliegenden Beispiel als spurgebundene Fahrzeuge ausgeführt.

Zum Be- und Entladen der Transportgefässe 12 sind Koppelstellen 13 vorhanden, die in fester Leitungsverbindung 14 mit den Behandlungsaggregaten 6 bis 9 stehen. Diese Leitungsverbindungen sind dabei im allgemeinen durch die eine Bedienungsebene 4 begrenzenden Böden 3 geführt. Ist diese Durchführung gasdicht ausgeführt, so ist es möglich, eine unter Umständen wünschenswerte Inertgas-Atmosphäre nicht in einer ganzen Behandlungsstufe 2a bis 2c bzw. dem ganzen Gebäude aufrechtzuerhalten, sondern auf eine oder einzelne Bedienungsebenen 4 zu beschränken. Werden die Böden 3 darüberhinaus geschlossen ausgeführt, so können sie dazu beitragen, dass eventuelle Unglücksfälle, beispielsweise Explosionen, oder an anderweitig entstandenen Leckstellen ausfliessende Schadstoffe, möglicherweise auf eine der Funktionsebenen 4 bzw. 5, zumindest aber auf eine Behandlungsstufe 2a bis 2c beschränkt bleiben.

Auf den Bedienungsebenen 4 wird für die durchzuführenden Behandlungen oder Prozesse praktisch immer Energie in unterschiedlicher Form benötigt. Für den linken Reaktor 6 der mittleren Behandlungsstufe 2b ist eine solche Energieversorgung als Beispiel skizziert. Sie erfolgt zweckmässigerweise auf der Niveauhöhe der jeweiligen Bedienungsebene 4. Auf dieser Höhe ist daher an das Gebäude 1 ein Energieversorgungskanal 15 angesetzt.

In diesem sind für verschiedene Energieformen Anschlusstellen 16 vorgesehen, die fix mit dem jeweiligen Behandlungsaggregat, in diesem Fall Reaktor 6, verbunden sind. Die in Fig. 1 dargestellten unteren Anschlüsse 16 führen beispielsweise zu einer Heiz- oder Kühlvorrichtung 17, die in Form einer den Behälter des Reaktors 6 umschliessenden Rohrschlange dargestellt ist. Der oberste Anschluss 16 dient z. B. als direkter Anschluss für die Einspeisung von grösseren Mengen an Lösungsmitteln oder von Gasen, z. B. Inertgasen über einen Leitungsstrang 26. Von den ohne Anschlusstellen 16 skizzierten, in den Kanal 15 führenden Leitungen versorgen die beiden oberen 19 beispielsweise einen Motor 18 eines Rührwerkes im Reaktor 6 mit elektrischer Energie, während die untere 20 einen Kühlmittelfluss durch einen Kühler 21 ermöglichen. Dieser dient zur Abkühlung und/oder Kondensation von den Reaktor 6 verlassenden gas- oder dampfförmigen Produkten, die entweder über eine Leitung 22 in den Reaktor 6 zurückgeführt oder über nicht dargestellte Leitungen entweder der darunter liegenden Transportebene 5 zugeführt oder aus dem System entfernt werden können. Diese Kondensatoranordnung dient dabei beispielsweise der Abführung von Prozesswärme und/oder dem Abdestillieren einzelner Reaktionskomponenten.

Absperrorgane und alle anderen zu steuernden Elemente - wie z. B. die Rührermotoren 18, die Roboter 10, die Fahrzeuge 11 und die zu füllenden und zu entleerenden Transportgefässe 12 - werden von einem Kontroll-, Analyse- und Steuerraum 27 überwacht und gesteuert, der an der einen Schmalseite des Gehäuses angeordnet ist.

In diesen Raum 27 hinein können, durch in Fig. 1 nicht eingezeichnete Schleusen, von den Robotern 10 nicht selbst zu analysierende Proben aus den Behandlungsaggregaten 6 bis 9 abgegeben werden.

Für den Transport von Fahrzeugen 11 und Gefässen 12 zwischen verschiedenen Transportebenen 5, um beispielsweise ein Produkt aus einem Reaktor 6 aus der unteren Transportebene 5 in die obere Transportebene 5 der gleichen Behandlungsstufe 2a bis 2c zu bringen und dadurch beispielsweise einem in der gleichen Bedienungsebene 4 liegenden Trockner 8 oder einem Filter 7 zuzuführen, sind über Schleusen 29 zugängliche Lifte 30 vorgesehen, die an der zweiten Schmalseite des Gebäudes 1 skizziert sind. Selbstverständlich dienen die Lifte 30 auch zum Transport von Stoffmengen zwischen verschiedenen Behandlungsstufen 2a bis 2c.

**Patentansprüche**

1. System für das batchweise chemische und/oder physikalische Behandeln von Stoffmengen, insbesondere von Explosiv-, Gift- oder anderen Schadstoffen, ohne menschliches Eingreifen innerhalb möglicher Gefahrenzonen, dadurch gekennzeichnet, dass mindestens eine Behandlungsstufe (2a bis 2c) mit drei auf unterschiedlichen vertikalen Niveauebenen angeordneten Böden (3) vorgesehen ist, wobei dem mittleren Boden (3), der sogenannten Bedienungsebene (4), die Behandlungsaggregate (6 bis 9) zugeordnet sind, während auf den beiden äusseren Böden (3), den sogenannten Transportebenen (5), an die Aggregate (6 bis 9) ankoppelbare führerlose Fahrzeuge (11) mit Transportgefässen (12) für das Zuführen zu behandelnder bzw. für das Wegführen behandelter Stoffmengen zirkulieren.

2. System nach Anspruch 1, dadurch gekennzeichnet, dass auf dem Boden (3) der Bedienungsebene (4) ein Roboter (10) zirkuliert.

3. System nach einem der Ansprüche 1 und 2, dadurch gekennzeichnet, dass mindestens die Böden (3) der Transportebenen (5) geschlossen sind.

4. System nach Anspruch 1 bis 3, dadurch gekennzeichnet, dass mindestens die Bedienungsebene (4) einer Behandlungsstufe (2a bis 2c) mit einer Inertgas-Atmosphäre gefüllt ist.

5. System nach einem der Ansprüche 1 bis 4, dadurch gekennzeichnet, dass mehrere vertikal übereinander angeordnete Behandlungsstufen (2a bis 2c) vorhanden sind, wobei bei einem Teil dieser Stufen (2a bis 2c) die Transportebene (5) für das Wegführen behandelter Stoffe einer höhergelegenen Stufe (2a, 2b) gleichzeitig die Transportebene für das Zuführen zu behandelnder Stoffe iner darunter liegenden Stufe (2b, 2c) bildet.

6. System nach Anspruch 1 oder 2, dadurch gekennzeichnet, dass die führerlosen Fahrzeuge (11) und/oder die Roboter (10) spurgebunden sind.

7. System nach einem der Ansprüche 1 bis 6, dadurch gekennzeichnet, dass auf der Bedienungsebene (4) der Behandlungsstufe (2a bis 2c) fixe Transportwege (22, 23, 26) und Anschlüsse (16) für von aussen zugeführte thermische, elektrische, pneumatische und/oder hydraulische Energie an den einzelnen Behandlungsaggregaten (6 bis 9) vorhanden sind.

8. System nach einem der Ansprüche 1 bis 7, dadurch gekennzeichnet, dass mindestens ein Teil der Böden (3) mit Anschlusstellen (13) für den Anschluss von Transportgefässen (12) versehen sind, und dass ferner von den Anschlusstellen (13) fixe Leitungsverbindungen (14) zu den Behandlungsaggregaten (6 bis 9) bestehen.

## Claims

1. A system for the batch chemical and/or physical treatment of substances, more particularly explosive, poisonous or otherwise noxious substances, without human intervention in potential danger zones, characterised in that at least one treatment stage (2a to 2c) is provided with three floors (3) arranged at different vertical levels, the treatment units (6 to 9) being associated with the central floor (3), or "operating level" (4), whereas on the two outer floors (3), or "conveying levels" (5), there run driverless vehicles (11) which can be coupled to the units (6 to 9), and which have transport vessels (12) for supplying batches for treatment or removing batches after treatment.

2. A system as claimed in claim 1, characterised in that a robot (10) moves about the floor (3) of the operating level (4).

3. A system as claimed in claim 1 or 2, characterised in that at least the floors (3) of the conveying levels (5) are solid.

4. A system as claimed in claims 1 to 3, characterised in that at least the operating level (4) of a treatment stage (2a to 2c) is filled with an inert gas atmosphere.

5. A system as claimed in any of claims 1 to 4, characterised in that a plurality of mutually superjacent treatment stages (2a to 2c) are provided, in a proportion of which the conveying level (5) for removing treated substances from a higher stage (2a, 2b) simultaneously forms the conveying level for supplying substances for treatment to a lower stage (2b, 2c).

6. A system as claimed in claim 1 or 2, characterised in that the driverless vehicles (11) and/or the robots (10) run on rails.

7. A system as claimed in any of claims 1 to 6, charcterised in that on the operating level (4) of the treatment stage (2a to 2c) there are fixed feed paths (22, 23, 26) and connections (16) for thermal, electrical, pneumatic and/or hydraulic energy supplied from the exterior to the individual treatment units (6 to 9).

8. A system as claimed in any of claims 1 to 7, characterised in that at least a proportion of the floors (3) are provided with terminals (13) for connecting transport vessels (12), and in addition the terminals (13) are linked by fixed line connections (14) to the treatment units (6 to 9).

## Revendications

1. Système pour le traitement chimique et/ou physique par charges de quantités de matières, notamment d'explosifs, de substances toxiques ou autres substances nocives, sans intervention humaine, à l'intérieur de zones potentiellement dangereuses, caractérisé en ce qu'il est prévu au moins un étage de traitement (2a à 2c) comportant trois plateaux (3) situés sur des plans à des niveaux verticaux différents, les ensembles de traitement (6 à 9) étant affectés au plateau médian (3), appelé plan de service (4), tandis que sur les deux plateaux extérieurs (3), appelés plans de transport (5), circulent des véhicules (11) sans conducteur pouvant être couplés avec les ensembles (6 à 9), pourvus de récipients de transport (12) servant à apporter des quantités de matières à traiter ou à emporter des quantités de matières traitées.

2. Système selon la revendication 1, caractérisé en ce qu'un robot (10) circule sur le plateau (3) du plan de service (4).

3. Système selon l'une des revendications 1 et 2, caractérisé en ce qu'au moins les plateaux (3) des plans de transport (5) sont fermés.

4. Système selon les revendications 1 à 3, caractérisé en ce qu'au moins le plan de service (4) d'un étage de traitement (2a à 2c) est rempli d'une atmosphère de gaz inerte.

5. Système selon l'une des revendications 1 à 4, caractérisé en ce qu'il présente plusieurs étages de traitement (2a à 2c) superposés verticalement, pour une partie desquels le plan de transport (5) sert à emmener les matières traitées d'un étage situé plus haut (2a, 2b) et forme en même temps le plan de transport servant à l'amenée de matières à traiter à un étage (2b, 2c) se trouvant en dessous.

6. Système selon la revendication 1 ou 2, caractérisé en ce que les véhicules (11) sans conducteur et/ou les robots (10) sont guidés sur voie.

7. Système selon l'une des revendications 1 à 6, caractérisé en ce qu'il est prévu sur le plan de service (4) de l'étage de traitement (2a à 2c) des voies de transport fixes (22, 23, 26) et des raccordements (16) pour amener de l'extérieur l'énergie thermique, électrique, pneumatique et/ou hydraulique aux ensembles individuels de traitement (6 à 9).

8. Système selon l'une des revendications 1 à 7, caractérisé en ce qu'une partie au moins des plateaux (3) présentent des points des raccordement (13) permettant l'adaptation des récipients de transport (12) et en ce qu'il existe des liaisons fixes (14) allant des points de raccordement (13) aux ensembles de traitement (6 à 9).

Fig.1

Fig.2